# EUROPÄISCHE PATENTSCHRIFT

(11) **EP 0 968 258 B1**
(45) Veröffentlichungstag und Bekanntmachung des Hinweises auf die Patenterteilung: **05.12.2001**
(21) Anmeldenummer: 98916994.1
(22) Anmeldetag: 18.03.1998
(51) Int. Cl.: C10G 53/08, C11B 3/10, B01D 15/00

(54) **VERFAHREN UND VORRICHTUNG ZUM REINIGEN VON VERUNREINIGUNGEN ENTHALTENDEN FLÜSSIGKEITEN**
METHOD AND DEVICE FOR PURIFYING CONTAMINATED LIQUIDS
PROCEDE ET DISPOSITIF POUR L'EPURATION DE LIQUIDES RENFERMANT DES IMPURETES

(30) Priorität: 18.03.1997 DE 19711174
(43) Veröffentlichungstag der Anmeldung: 05.01.2000
(73) Patentinhaber: ÖHMI Aktiengesellschaft, 39114 Magdeburg (DE)
(72) Erfinder: TRANSFELD, Peter, D-39104 Magdeburg (DE); BÖRNER, Gunter, D-39171 Langenweddingen (DE); SCHNEIDER, Matthias, D-39114 Magdeburg (DE); WETZEL, Rainer, D-39579 Uenglingen (DE)
(74) Vertreter: Einsel, Martin, Dipl.-Phys.
(86) Internationale Anmeldenummer: EP9801567
(87) Internationale Veröffentlichungsnummer: WO9841596

(56) Entgegenhaltungen:
- EP-A- 0 524 534
- DE-C- 19 620 695
- GB-A- 1 470 361
- US-A- 2 618 644
- US-A- 2 717 256
- US-A- 3 763 040

## Beschreibung

Die Erfindung betrifft ein Verfahren zum Reinigen von Verunreinigungen enthaltenden Flüssigkeiten, wobei eine Zugabe von Adsorbentien erfolgt, sowie eine Vorrichtung zur Durchführung dieses Verfahrens.

Es ist bekannt, daß in Verarbeitungsprozessen Verunreinigungen, beispielsweise Farbstoffe, Phosphatide und Feststoffpartikel, aus flüssigen Wertstoffen abgetrennt werden müssen. Beispielsweise ist in der DE 31 23 462 A1 eine Vorrichtung zur elektrostatischen Reinigung von dielektrischen Flüssigkeiten beschrieben, bei der die dielektrische Flüssigkeit in einem Behälter mit einer Zuflußöffnung für das verunreingte Dielektrikum und einer Abflußöffnung für das gereinigte Dielektrikum im oberen Teil des Behälters sowie einer Auslaßöffnung für die Verunreinigungen im unteren Teil über darin angeordnete, zwei Systeme von Elektroden einem elektrischen Feld ausgesetzt ist. Das Abscheiden der sehr kleinen Teilchen, die bei elektroerosiver Bearbeitung in die dielektrische Flüssigkeit gelangen, ist mit mechanischen Filtern aufgrund der geringen Durchlässigkeit des sich bildenden Filterkuchens kaum möglich. Hierfür eignet sich insbesondere die elektrostatische Reinigung.

Insbesondere für die Gewinnung oder Verarbeitung von tierischen, pflanzlichen oder maritimen Ölen ist aus der DE 42 10 795 C1 allgemein bekannt, daß diese Flüssigkeiten, insbesondere für die Herstellung von Lebensmitteln, zusammen mit Feststoffpartikeln ein Gemisch bilden. Die Feststoffpartikel und Verunreinigungen können u. a. unerwünschte Phosphatide, Seifenreste und komplexe kolloidale Verbindungen sein, aber auch zur Durchführung einer Reinigung zugesetzte Adsorbentien wie Bleicherde, Aktivkohle und Silica. Diese Adsorbentien werden zum Zwecke der Reinigung mit der Flüssigkeit vermischt. Dabei kontaktieren diese Adsorbentien in einer sogenannten Bleichstufe u. a. Farbstoffe wie Carotin und Chlorophyll, Schwermetalle, Reste von Phosphatiden und Seifen sowie Peroxide. Durch den Kontakt lagern sich diese Stoffe aus dem Öl oder Fett an die Adsorbentien an und können zusammen mit diesen aus der Flüssigkeit entfernt werden.

Die Abtrennung des mit den genannten Stoffen beladenen Adsorbens von dem gebleichten Öl erfolgt bei dem bekannten Verfahren mit Hilfe von Druckfiltem, die nach dem Prinzip der Anschwemmfiltration arbeiten. Für die Filterung sind z. B. Rahmenfilterpressen, Plattenfilter und Kerzenfilter bekannt sowie die Crossflowfiltration. Nachteilig an der Druckfiltration ist jedoch, daß der sich aufbauende Filterkuchen den Durchfluß der Flüssigkeit stark hemmt. Damit einhergehend ist ein erheblicher Energieaufwand für das Durchpumpen der Flüssigkeit erforderlich. Darüber hinaus ist das Tragvermögen der Filter schnell erreicht, was einen häufigen Filteraustausch oder Filterabreinigen erfordert.

Demgegenüber ist aus der DE 43 44 828 A1 ein Verfahren und eine Vorrichtung zum Reinigen von Verunreinigungen enthaltenden Flüssigkeiten bekannt, bei der die verunreinigte Flüssigkeit mittels gegeneinander isolierter Elektroden einem elektrischen Feld ausgesetzt wird, wobei gleichzeitig die Viskosität der zu reinigenden Flüssigkeit durch Erwärmen herabgesetzt wird. Bei diesem Verfahren kann zwar ein Teil der Flüssigkeit gereinigt abgezogen werden, jedoch bleibt ein nicht unerheblicher Teil der Flüssigkeit im Trüblauf. Zudem ist nachteilig, daß die Ausgestaltung und Ansteuerung der Elektroden aufwendig ist.

Der Erfindung liegt die Aufgabe zugrunde, ein Verfahren und eine Vorrichtung zum Reinigen von Verunreinigungen enthaltenden Flüssigkeiten, wie Ölen und Fetten anzugeben, bei der/dem die Auftrennung bei geringem apparativen Aufwand und Energiebedarf erfolgt.

Gelöst wird diese Aufgabe bei dem eingangs genannten Verfahren durch die Schritte:
- Zugabe von Adsorbentien, die die Verunreinigungen adsorbieren, zu der Flüssigkeit,
- Agglomerieren jeweil mehrerer Adsorbenspartikel mit den darin/daran adsorbierten Verunreinigungen zu größeren Adsorbenspartikeln,
- erneutes Suspendieren der nun größeren Adsorbenspartikel in der Flüssigkeit, und
- Filtrieren der Flüssigkeit mit den suspendierten größeren Adsorbenspartikeln.

Zunächst adsorbieren wie üblich die relativ feinkörnigen Adsorbenspartikel die Verunreinigungen, die in der Flüssigkeit als Feststoffpartikel oder Farbstoff oder sonst vorhanden sind und entfernt werden sollen. Nachdem oder während die Adsorbenspartikel die Verunreinigungen aufgenommen haben, wird nun eine Agglomeration der feinkörnigen Adsorbenspartikel vorgenommen.

Bevorzugt wird die Suspension zunächst eine bestimmte Zeit einem elektrischen Feld ausgesetzt, wobei die geladenen Partikel zu einer Elektrode bewegt werden. Dort agglomerieren diese Partikel, werden abgeschieden und beim Abschalten des elektrischen Feldes erneut in der Flüssigkeit suspendiert, wobei die Adsorbenspartikel durch die Agglomeration eine vergrößerte Partikelstruktur aufweisen. Insbesondere haben die Partikel nach der Agglomeration eine poröse, lockere Struktur.

Die nachfolgende Filtration, die bevorzugt als Druckfiltration ausgeführt wird, ist aufgrund der vergrößerten Partikelstruktur effektiver durchführbar, da die vergrößerten Partikel bei der Bildung des Filterkuchens eine ausreichende Durchlässigkeit für die Flüssigkeit gewähren. Damit ist es erfindungsgemäß möglich, die Filtration bis zu einer erheblich höheren Beladung der Filterfläche zu betreiben.

Wenn gleichzeitig, wie aus der DE 43 44 828 A1 bekannt, bei der Agglomeration der Feststoffe eine im wesentlichen adsorbens - und damit feststoffpartikelfreie Fraktion der Flüssigkeit, beispielsweise an einem im oberen Teil eines Behälters angeordneten Auslauf, abgezogen wird, ist bereits ein Teil der abzutrennenden Flüssigkeit gereinigt. In der restlichen Flüssigkeit entsteht bei erneuter Suspendierung der durch das elektrische Feld zunächst gesammelten und angelagerten Feststoffe eine stark aufkonzentrierte Suspension. Aufgrund der porösen Struktur der agglomerierten Partikel in der zu reinigenden Flüssigkeit bei der nachfolgenden Druckfiltration kann die Fläche der beispielsweise verwendeten Anschwemmfilter erheblich reduziert werden.

Besonders wirkungsvoll wird die Erfindung, wenn man sie als Teilschritt bei einem Gegenstrombleichverfahren einsetzt, wie es beispielsweise in der nachveröffentlichten deutschen Patentanmeldung 196 20 695.2-41 beschrieben ist. Bei Gegenstromverfahren werden in einer Stufe jeweils ungereinigte Öle mit schon teilweise beladenem Adsorbens in Kontakt gebracht und dann in einer zweiten Stufe das in der ersten Stufe teilweise gereinigte Öl mit frischen Adsorbens. Das in dieser zweiten Stufe benutzte Adsorbens dient dann in der ersten Stufe als teilweise beladenes Adsorbens. Endergebnis der zweiten Stufe ist dann hochgereinigtes Öl.

Die jetzt erfindungsgemäß entstehende aufkonzentrierte Suspension mit den schon agglomerierten und beladenen Adsorbenspartikeln kann in einem solchen Gegenstromverfahren nun als das "teilweise beladene Adsorbens" behandelt und in der ersten Stufe gemeinsam mit dem noch ungereinigten Öl eingebracht werden. Die agglomerierten Adsorbenspartikel können so nochmals wertstoffsparend genutzt werden.

Für die Reinigung von tierischen, pflanzlichen oder maritimen Ölen und/oder Fetten, insbesondere für die Herstellung von Lebensmitteln ist die Verwendung von Bleicherde als Adsorbentien bevorzugt Möglich ist aber beispielsweise auch die Verwendung von Kieselgelen oder Aktivkohle.

Dadurch, daß die zuzuführende Bleicherde einen großen Feinkornanteil hat, beispielsweise mit einem Kornspektrum von 5 bis 10 µm, wird aufgrund der vergrößerten freien Oberfläche der feinkörnigen Bleicherde die Adsorptionskraft erhöht. Es ist daher nicht mehr nötig, Bleicherde im Überschuß zu dosieren. Vorteilhaft verringert sich somit der Bleicherdeverbrauch. Der Bleicherdeeinsatz kann beispielsweise bei Rapsöl von bisher üblichen minimal 0,6 % auf 0,3 % absolut reduziert werden. Darüber hinaus ist die feinkörnige Bleicherde in den Beschaffungskosten günstiger als die bisher verwendete, durch Vorbehandlung strukturierte Bleicherde. Denn bisher stellte die Korngrößenverteilung einen Kompromiß zwischen einer ausreichend guten Bleichwirkung und einer hinreichend guten Abtrennbarkeit durch konventionelle Filteranlagen dar. Da erfindungsgemäß jedoch mit feinkörniger Bleicherde hoher Adsorptionskraft begonnen wird und diese zu grobkörnigeren Partikeln zusammengeballt wird, ist die Suspension für die nachfolgende Filtration optimal strukturiert.

Eine besonders wirtschaftliche Druckfiltration wird erreicht, wenn der Feststoffgehalt der aufkonzentrierten Suspension auf 10 % bis 30 %, bevorzugt 17 % bis 20 %, eingestellt wird.

Bevorzugt wird das erfindungsgemäße Verfahren diskontinuierlich betrieben, wobei zunächst eine Charge von zu reinigender Flüssigkeit einem elektrischen Feld ausgesetzt und agglomeriert wird, ggf. eine Fraktion gereinigte Flüssigkeit abgezogen wird, nachfolgend das elektrische Feld abgeschaltet wird und die Adsorbenspartikel in der (restlichen) Flüssigkeit suspendieren, wonach die aufkonzentrierte Suspension gefiltert wird.

Wenn die aufkonzentrierte Suspension ebenfalls gesammelt wird und erst danach der Druckfiltration zugeführt wird, kann auch die Druckfiltration wirtschaftlich durchgeführt werden, wobei insbesondere bei Erreichen einer bestimmten Filterkuchenbelastung die Druckfiltration jederzeit unterbrochen werden kann, um den Filterkuchen auszutragen.

Wenn die Agglomeration in zwei oder mehreren Einzeleinheiten durchgeführt wird, wobei diese Einheiten so zeitversetzt die Druckfiltration beschicken, kann der Gesamtprozeß trotz der chargenweisen Agglomeration kontinuierlich ablaufen.

In weiterer Ausgestaltung ist es, insbesondere zur Verbesserung bestehender Verfahrensabläufe, bevorzugt, daß ein Teilstrom der Feststoffpartikel enthaltenden Flüssigkeit der Agglomeration und der nachfolgenden erneuten Suspendierung ausgesetzt wird, wobei die aufkonzentrierte Suspension dem nicht bearbeiteten anderen Teilstrom der Flüssigkeit zugeführt und gemeinsam gefiltert wird. Die in der aufkonzentrierten Suspension enthaltenen, vergrößerten Teilchenstrukturen erhöhen in der nachfolgenden Druckfiltration die Durchlässigkeit des sich aufbauenden Filterkuchens. Somit kann auch über eine Teilbehandlung eine wirtschaftlichere Reinigung erreicht werden.

Vorrichtungsgemäß wird die Aufgabe dadurch gelöst, daß wenigstens ein Agglomerator mit einem Zulauf, je einem Auslauf für die getrennten Bestandteile (Klarlauf, aufkonzentrierte Suspension) und einer Vorrichtung zur Erzeugung der Agglomeration, insbesondere eines elektrischen Feldes sowie ein Druckfilter mit einem Zulauf für die aufkonzentrierte Suspension und je einem Auslauf für die getrennten Bestandteile (Klarlauf, Filterkuchen) vorgesehen sind.

Die zu reinigende Flüssigkeit wird in dem Agglomerator mit der Vorrichtung zur Erzeugung eines elektrischen Feldes, beispielsweise an einer Elektrodenseite, gesammelt und agglomeriert. Während dieser Phase kann über den oberen Auslauf bereits gereinigte Flüssigkeit abgezogen werden. Nach Abschalten des elektrostatischen Feldes werden die agglomerierten Partikel erneut in der Restflüssigkeit suspendiert und über den zweiten Auslauf als aufkonzentrierte Suspension dem Druckfilter zugeführt. Von dort gibt ein Auslauf die gereinigte Flüssigkeit aus. Von dem zweiten Auslauf des Druckfilters kann bedarfsweise der Filterkuchen abgezogen werden.

Bevorzugt ist, daß vor dem Agglomerator im Zulauf ein erster Sammelbehälter vorgesehen ist, um bei einem chargenweisen Betrieb des Agglomerators eine davon unabhängige Flüssigkeitszuführung zu ermöglichen.

Wenn am ersten Sammelbehälter eine Vakuumpumpe angeschlossen ist, kann in diesem Sammelbehälter ein niedriger Druck von beispielsweise 40 bis 120 mbar eingestellt werden. Zur weiteren Verbesserung der Adsorption der zugeführten Bleicherde ist es ferner vorteilhaft, die Flüssigkeit in dem Behälter auf eine Temperatur von 90° C bis 130° C zu erwärmen.

Wenn am Auslauf des Agglomerators ein zweiter Sammelbehälter vorgesehen ist, dessen Auslauf über eine Pumpe zum Druckfilter führt, kann zum Abreinigen des Druckfilters die Zufuhr von aufkonzentrierter Suspension kurzfristig unterbrochen werden, ohne das der Betrieb des Agglomerators davon gestört wird. Die aufkonzentrierte Suspension wird in dem zweiten Sammelbehälter gepuffert.

Dadurch, daß wenigstens zwei parallel angeschlossene Agglomeratoren vorgesehen sind, die stufenweise betrieben werden, kann die zu reinigende Flüssigkeit praktisch kontinuierlich zugeführt werden, wohingegen die parallel angeschlossenen Agglomeratoren stufenweise oder abwechselnd betrieben werden. In diesem Fall ist das Vorsehen eines ersten Sammelbehälters vor den Agglomeratoren nicht nötig.

Es ist in einer alternativen Ausführungsform der Erfindung auch möglich, daß die Agglomeration statt des oder zusätzlich zu dem elektrischen Feld mittels Utraschall oder mittels Zusatz von chemischen oder biochemischen Stoffen erfolgt.

Nachfolgend werden drei Ausführungsbeispiele der Erfindung anhand der beiliegenden Zeichnungen beschrieben.

Es zeigen:
- Fig. 1: eine Vorrichtung zum Reinigen von Verunreinigungen enthaltenden Flüssigkeiten nach dem erfindungsgemäßen Verfahren;
- Fig. 2: eine andere Ausführungsform einer derartigen Vorrichtung; und
- Fig. 3: eine weitere Ausführungsform einer derartigen Vorrichtung.

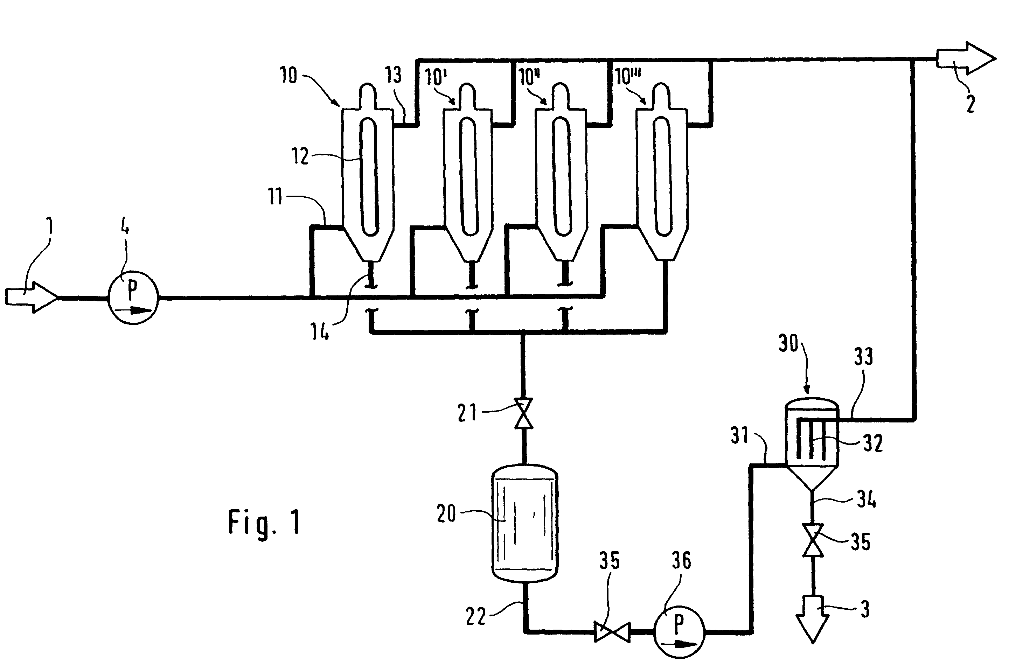

In **Fig. 1** ist schematisch der Aufbau einer Vorrichtung zum Reinigen von Verunreinigungen enthaltenden Flüssigkeiten in einer ersten Ausführungsform dargestellt. Ein Zulauf für die zu reinigende Suspension ist mit einem Pfeil 1 bezeichnet. Die Zuleitung führt über eine Zulaufpumpe 4 zu vier parallel angeschlossenen Agglomeratoren 10, 10', 10", 10"'. Die Agglomeratoren sind übereinstimmend ausgebildet und werden im Wechsel betrieben. Der Agglomerator 10 hat eine Zulauföffnung 11, an die der über die Zulaufpumpe 4 geführte Zulauf 1 der zu reinigenden Suspension angeschlossen ist. Im Innern jedes Agglomerators 10, 10', 10", 10"' befindet sich eine Vorrichtung 12 zur Erzeugung eines elektrischen Feldes, die beispielsweise aus zwei Elektroden oder Elektrodensystemen aufgebaut sein kann. An jedem der Agglomeratoren 10, 10', 10", 10"' ist ein Auslauf 13 für den bereits im Agglomerator gereinigten Bestandteil der Flüssigkeit, dem Klarlauf, vorgesehen. Dieser Auslauf 13 befindet sich im oberen Teil des Agglomerators, um zu vermeiden, daß Verunreinigungen in den Klarlauf gelangen. Am unteren Ende jedes Agglomerators 10, 10', 10", 10''' befindet sich ein Auslauf 14 für die aufkonzentrierte Suspension. Der Auslauf 14 jedes Agglomerators 10, 10', 10", 10"' ist zusammengefaßt und über ein Ventil 21 an einen zweiten Sammelbehälter 20 angeschlossen.

In dem Sammelbehälter 20 befindet sich also das Agglomerat oder Konzentrat bzw. die aufkonzentrierte Suspension.

Vom zweiten Sammelbehälter 20 führt eine Auslaßleitung 22 für die aufkonzentrierte Suspension zu einem Zulauf 31 eines Druckfilters 30. In dieser Verbindungsleitung ist ein Ventil 35 und eine Schlammpumpe 36 angeordnet. Die Schlammpumpe 36 drückt die aufkonzentrierte Suspension gegen die im Druckfilter 30 angeordneten Anschwemmfilter 32, um dort einen Filterkuchen zu bilden. Die durch den Filter 32 durchtretende Flüssigkeit wird über einen Auslauf 33 des Druckfilters 30 auf eine mit Pfeil 2 bezeichnete Ablaufleitung geführt, an die auch die Ausläufe 13 der Agglomeratoren 10, 10', 10", 10"' angeschlossen sind.

Über diese mit Pfeil 2 bezeichnete Ablaufleitung verläßt also das Filtrat den Reinigungsprozeß.

Am unteren Ende des Druckfilters 30 ist ein Auslauf 34 angeordnet, der über ein Ventil 37 zu einem mit Pfeil gekennzeichneten Ablauf 3 für die auszutragende pastöse Masse (Filterkuchen) führt.

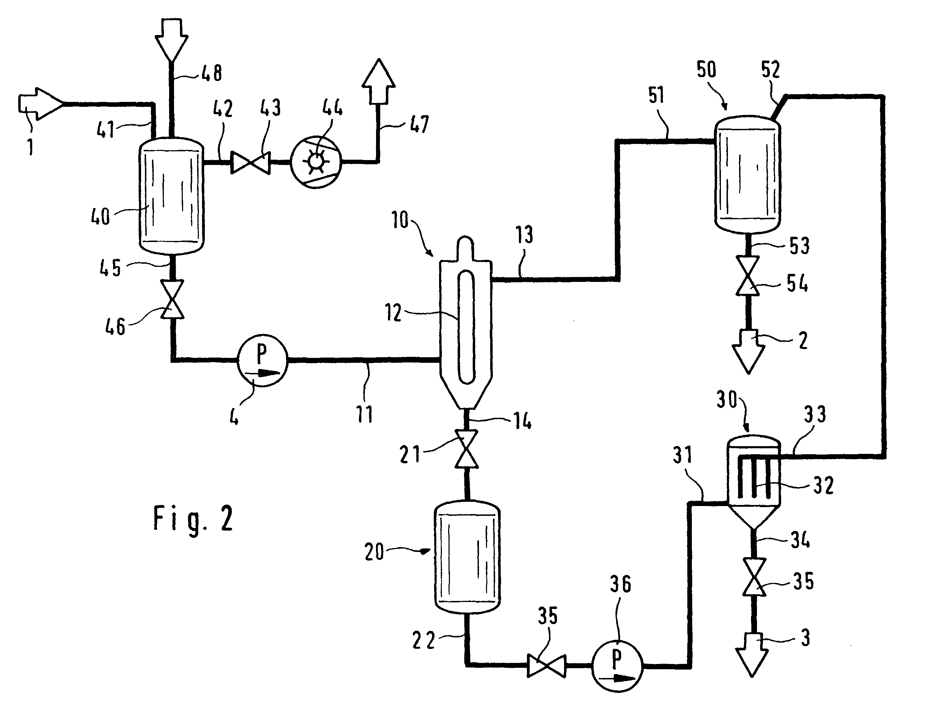

Im zweiten Ausführungsbeispiel gemäß **Fig.2** sind funktionsmäßig gleiche Bauteile mit den gleichen Bezugszeichen entsprechend des Ausführungsbeispiels nach Fig. 1 bezeichnet. In Fig. 2 ist am Zulauf 1 eine Bleichstufe 40 bis 47 vorgeschaltet. In der Vorstufe werden Adsorbentien der zu reinigenden Flüssigkeit zugeführt. Die Bleichstufe besteht aus einem ersten Sammelbehälter 40, der einen Zulauf 41 zum Befüllen mit der zu reinigenden Flüssigkeit und einen weiteren Zulauf 48 für die frischen Adsorbentien hat. Ferner ist an dem ersten Sammelbehälter 40 eine Absaugöffnung 42 mit Ventil 43 und Vakuumpumpe 44 zur Erzeugung eines Unterdrucks im Behälter angeordnet. Eine mit dem Pfeil 47 bezeichnete Leitung zeigt hier schematisch das Vakuum an. Am unteren Ende des Behälters 40 ist ein Auslauf 45 mit Ventil 46 zum Austragen der mit den Adsorbentien befrachteten Flüssigkeit vorgesehen. Diese Flüssigkeit wird über die Zulaufpumpe 4 einem Zulauf 11 eines Agglomerators 10 zugeführt. In diesem Ausführungsbeispiel ist lediglich ein einzelner Agglomerator 10 vorgesehen, so daß diese Vorrichtung chargenweise zu betreiben ist.

In dem Agglomerator 10 ist eine Elektrodenanordnung 12 zur Erzeugung eines elektrischen Feldes angeordnet. Der Klarlauf des Agglomerators wird über einen im oberen Teil des Behälters angeordneten Auslauf 13 zu einem Zulauf 51 eines dritten Sammelbehälters 50 geführt. Am unteren Ende des Agglomerators 10 ist ein Auslauf 14 mit einem Ventil 21 für die aufkonzentrierte Suspension vorgesehen. Zum Sammeln der aufkonzentrierten Suspension ist ein zweiter Sammelbehälter 20 vorgesehen. Ein Auslauf 22 des zweiten Sammelbehälters 20 führt über Ventil 35 und Schlammpumpe 36 zu einem Zulauf 31 eines Druckfilters 30.

Der Druckfilter 30 weist innen eine Anschwemmfilterkonstruktion 32 auf, die die Schwebteilchen der aufkonzentrierten Suspension auffangen. Der Druckfilter 30 weist einen Auslauf 33 für das Filtrat auf, der an einen Zulauf 52 des dritten Behälters 50 angeschlossen ist. Ferner weist der Druckfilter 30 an seinem untersten Ende eine Ablauföffnung 34 mit Ventil 35 zum Austragen des Filterkuchens gemäß Pfeil 3 auf.

Der dritte Sammelbehälter 50 enthält die gereinigte Flüssigkeit. An seinem unteren Ende ist ein Auslauf 53 mit Ventil 54 zum Ausgeben der gereinigten Flüssigkeit gemäß Pfeil 2 vorgesehen.

Nachfolgend wird das Reinigungsverfahren unter Bezugnahme auf die gezeigten Ausführungsbeispiele beschrieben.

Bei dem Verfahrensablauf nach der in **Fig. 1** dargestellten Ausführungsform wird die mit Verunreinigungen belastete Flüssigkeit im wesentlichen kontinuierlich über die Zulaufpumpe 4 wenigstens einem Agglomerator 10, 10', 10", 10"' zugeführt. Die Agglomeratoren werden chargenweise nacheinander im Stufenbetrieb befüllt. Nach der Befüllung des ersten Agglomerators 10 wir dann der zweite Agglomerator 10' mit der zu reinigenden Suspension befüllt, während im ersten Agglomerator 10 die Flüssigkeit mittels der Elektroden 12 einem elektrischen Feld ausgesetzt wird. In dieser Phase werden die Feststoffpartikel an einer Elektrodenseite gesammelt und agglomeriert. An der anderen Seite steht dann gereinigte Flüssigkeit an, die über Auslauf 13 dem Klarlauf zugeführt wird. In dieser Phase wird bereits der dritte Agglomerator 10" mit der zu reinigenden Suspension befüllt, während im zweiten Agglomerator 10' die Flüssigkeit bereits einem elektrischen Feld ausgesetzt wird. Nach Abschalten des elektrischen Feldes im ersten Agglomerator 10 suspendieren die an der Elektrode angesammelten Feststoffpartikel in der restlichen Flüssigkeit. Somit entsteht eine aufkonzentrierte Suspension. Während nun bereits der vierte Agglomerator 10'" mit zu reinigender Suspension befüllt wird, wird aus dem ersten Agglomerator 10 über Auslauf 14 die aufkonzentrierte Suspension abgezogen. Nun ist der erste Agglomerator 10 bereit, die nächste Charge zu reinigende Flüssigkeit aufzunehmen.

Die aufkonzentrierte Suspension wird in einem zweiten Sammelbehälter 20 zwischengespeichert und mittels Ventil 35 und Schlammpumpe 36 bedarfsweise dem Druckfilter 30 zugeführt. Das Ventil 35 ist geöffnet und die Pumpe 36 wird betrieben, bis der sich an den im Druckfilter 30 angeordneten Anschwemmfiltern 32 gebildete Filterkuchen eine maximale Stärke erreicht hat.

Da die in den Agglomeratoren 10, 10', 10", 10"' agglomerierten und erneut suspendierten Teilchen eine vergrößerte Struktur aufweisen, bleibt eine ausreichende Durchlässigkeit des Filterkuchens für die zu filternde Flüssigkeit lange erhalten. Das bei der Druckfiltration entstehende Filtrat wird zusammen mit dem Klarlauf der Agglomeratoren 10, 10', 10", 10"' als gereinigte Flüssigkeit bereitgestellt.

Von Zeit zu Zeit wird die Druckfiltration unterbrochen, das Ventil 35 geschlossen und der an den Anschwemmfiltern aufgebaute Filterkuchen über Auslaß 34 und Ventil 37 als pastöse Masse ausgetragen.

Vom Grundsatz her ähnlich ist der Verfahrensablauf gemäß Ausführungsform nach **Fig. 2,** wobei lediglich ein Agglomerator 10 vorgesehen ist, so daß die Anlage chargenweise zu betreiben ist. Zusätzlich ist in der Fig. 2 dargestellt, daß der zu reinigenden Flüssigkeit über den Zulauf 48 Adsorbentien zugeführt werden, die in einem ersten Vorratsbehälter 40 erwärmt und bei vermindertem Druck gehalten werden. In diesem Behälter adsorbieren die zugeführten Adsorbentien die in der Flüssigkeit enthaltenen Verunreinigungen. Die mit den Adsorbentien befrachtete Flüssigkeit wird nun dem bereits beschriebenen Reinigungsablauf zugeführt.

Wichtig dabei ist insbesondere, daß die in der Flüssigkeit befindlichen Teilchen, insbesondere die Adsorbentien, in der Adsorptionsstufe möglichst eine geringe Teilchengröße haben, um eine optimale Adsorptionswirkung bei geringem Verbrauch von Adsorbentien zu ermöglichen. In dem Agglomerator werden nun die Teilchen und Adsorbentien agglomeriert und nach Abschalten des elektrischen Feldes erneut suspendiert, wobei aufstrukturierte Teilchen, d. h. Teilchen mit vergrößerter Teilchengröße und poröser, lockerer Struktur, entstehen. Die dabei entstehende, aufkonzentrierte Suspension ist aufgrund der vergrößerten Teilchengröße optimal für eine Druckfiltration vorstrukturiert.

Bei der Verwendung einer Anlage gemäß Fig. 2 zur Bleichung von Pflanzenölen kann beispielsweise eine Charge von 200 I entschleimtes und entsäuertes oder nur entschleimtes, aber in jedem Fall getrocknetes Rapsöl im ersten Sammelbehälter 40 vorgelegt werden. Dort wird die Bleichung bei einer Temperatur von 90 °C bis 130 °C, einem Druck von 40 bis 120 hPa bzw. mbar und einem Zusatz von 0,2 % bis 1,5 % aktivierter Bleicherde mit beliebiger Körnung durchgeführt.

Nach Abschalten des Vakuums wird das gebleichte Öl als Suspension in den Agglomerator 10 gepumpt, der eine Abscheidefläche von 0,4 m² als Elektrode aufweist. Während des Befüllens des Agglomerators liegt eine Spannung von 20 kV an den Elektroden an. Anschließend wird die Spannung auf 30 bis 40 kV erhöht. Die in der Suspension enthaltene, mit den Verunreinigungen beladene Bleicherde bewegt sich nun zur positiven Elektrode, der Abscheidefläche, und agglomeriert hierbei.

Das oberhalb der positiven Elektrode am Ausfluß 13 austretende klare Öl wird in dem dritten Sammelbehälter 50 gesammelt. Nach einer bestimmten Zeit, ca. 15 min, ist die Kapazität der Abscheidefläche erschöpft und die Zulaufpumpe wird abgestellt. Nach Abschalten des elektrischen Feldes suspendieren die an der positiven Elektrode agglomerierten Bleicherdeteilchen erneut im Öl. Der Inhalt des Agglomerators wird nun in den Schlammbehälter 20 geführt. Das Öl und die agglomerierte Bleicherde ergibt eine Suspension mit 10 % bis 30 % Bleicherde für die nachfolgende Druckfiltration. Diese beschriebene Prozedur wird nun solange wiederholt, bis ca. 100 I aufkonzentrierte Suspension (Schlamm) vorliegen.

Anschließend wird diese aufkonzentrierte Suspension mittels der Schlammpumpe 36 über einen modifizierten Anschwemmfilter mit 0,2 m² Filterfläche gefahren. Diese Filtration wird bis zu einer Beladung von 85 kg pro m² Filterfläche betrieben. Der Rest an klarem Öl wird ebenfalls im Sammelbehälter 50 gesammelt, während der Filterkuchen als pastöse Masse nach unten ausgetragen wird. Die übliche Trocknung durch Ausblasen mit Druckluft oder Dampf bis auf einen Restölgehalt von 20 bis 30 % ist nachfolgend möglich.

Die erfindungsgemäße Verfahrensweise erlaubt somit beliebig strukturierte Adsorbentien, beispielsweise Bleicherde mit maximalem Feinkornanteil, zu verwenden. Dies führt zu erheblichen wirtschaftlichen Vorteilen, da kostengünstigere Bleicherde durch Wegfall der bisherigen Vorstrukturierung verwendbar ist, und insgesamt zu einer geringeren Dosierung, da die Bleicherde nicht mehr im Überschuß zugegeben werden muß. Ferner tritt an Stelle der bisherigen apparatetechnisch und wartungsmäßig aufwendigen Filtrationsapparate, die zu dem immer paarweise angelegt werden mußten, nun eine kompakte wartungsfreie Vorbehandlungsstufe (Agglomerator) mit einer nachgeschalteten verkleinerten Druckfiltrationsstufe, dessen Filterfläche aufgrund der porösen Struktur des Filterkuchens um 80 % verringert sein kann.

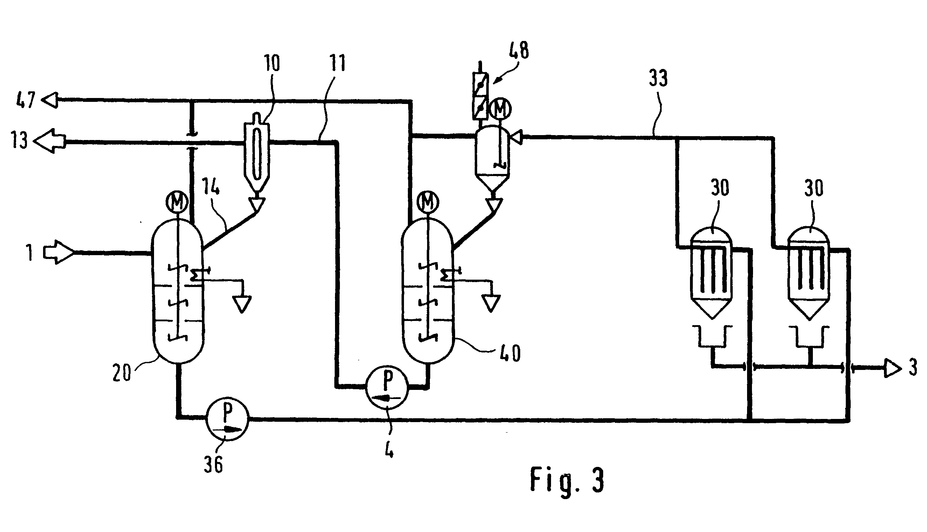

Die Ausführungsform aus **Figur 3** stellt ein Gegenstrombleichverfahren unter Anlehnung an die im übrigen nachveröffentlichte deutsche Patentanmeldung 196 20 695.2-41 dar. Die Bezugszeichen sind hier an funktionell ähnlichen Elementen wie in den beiden anderen oben diskutierten Ausführungsbeispielen angeordnet. Allerdings ist der Ablauf teilweise etwas unterschiedlich.

Beim Zulauf 1 wird die zu reinigende Suspension in einen Behälter 20 zugeführt. Diesem Behälter 20 wird über eine Leitung 14 der Auslauf mit dem Schlamm aus einer anderen Stufe, nämlich dem Agglomerator 10, zugeführt, der noch weiter unten beschrieben ist. Aus dem Sammelbehälter 20 wird über eine Pumpe 36 die entstehende Gesamtmenge bzw. Mischung aus teilweise gereinigter Suspension mit dem Schlamm und dem darin enthaltenen stark verschmutzten Bleicherdeanteil zwei Druckfiltern 30 zugeführt. In den Druckfiltern 30 werden jetzt die stark verschmutzten Bleicherdeanteile nebst Schlamm und anderen unerwünschten Feststoffanteilen herausgefiltert und über den Ablauf 3 aus dem Prozeß entfernt. Der Auslauf 33 aus dem Druckfilter 30 führt den Rest, also die nun schon teilweise gereinigte Suspension, einem weiteren Behälter zu, in dem sie mit frischer Bleicherde aus einem Zulauf 48 ergänzt und dem ersten Sammelbehälter 40 zugeführt wird, der hier einen Mischer enthält. Dieser Mischer 40 vermengt die schon stark gereinigte und nur noch relativ wenig Verschmutzungen enthaltende Flüssigkeit bzw. Suspension mit der noch über starke Reinigungskraft verfügenden, nämlich frischen Bleicherde. Diese Mischung wird über die Pumpe 4 nun dem Agglomerator 10 zugeführt, der oben schon erwähnt wurde. Der Agglomerator 10 arbeitet jetzt ähnlich, wie in den ersten Ausführungsbeispielen beschrieben, so daß hier darauf verwiesen wird. Der Klarlauf läuft über den Auslauf 13 hier wiederum aus dem Prozeß heraus, die jetzt teilweise verschmutzte und benutzte Bleicherde wird als Schlamm über den Auslauf 14 wieder in den zweiten Sammelbehälter 20 zugeführt, wie oben zu diesem Ausführungsbeispiel schon erwähnt wurde.

Dabei kann der Agglomerator 10 zusätzlich so arbeiten, wie dies in der deutschen Patentanmeldung 196 20 695.2-41 beschrieben ist. Auf den Inhalt wird insoweit ausdrücklich bezug genommen.

Die Sammelbehälter 20 und 40 sowie der Zwischenbehälter sind wiederum über eine Leitung 47 an Vakuum angeschlossen.

### Bezugszeichenliste

- 1: Zulauf (Pfeil)
- 2: Ablauf (Pfeil)
- 3: Ablauf (Pfeil)
- 4: Zulaufpumpe

- 10: Agglomerator
- 10': Agglomerator
- 10": Agglomerator
- 10"': Agglomerator
- 11: Zulauf
- 12: Elektrodenvorrichtung
- 13: Auslauf (Klarlauf)
- 14: Auslauf (Schlamm)

- 20: zweiter Sammelbehälter
- 21: Ventil
- 22: Auslauf

- 30: Druckfilter
- 31: Zulauf
- 32: Anschwemmfilter
- 33: Auslauf
- 34: Auslauf
- 35: Ventil
- 36: Pumpe

- 40: erster Sammelbehälter
- 41: Zulauf
- 42: Absaugöffnung
- 43: Ventil
- 44: Vakuumpumpe
- 45: Auslauf
- 46: Ventil
- 47: Leitung (Pfeil)

- 48: Zulauf
- 50: dritter Sammelbehälter
- 51: Zulauf
- 52: Zulauf
- 53: Auslauf
- 54: Ventil

## Patentansprüche

1. Verfahren zum Reinigen von Verunreinigungen enthaltenden Flüssigkeiten, mit folgenden Schritten:
- Zugabe von Adsorbentien, die die Verunreinigungen adsorbieren, zu der Flüssigkeit,
- Agglomerieren jeweils mehrerer Adsorbenspartikel mit den darin/daran adsorbierten Verunreinigungen zu größeren Adsorbenspartikeln,
- erneutes Suspendieren der nun größeren Adsorbenspartikel in der Flüssigkeit, und
- Filtrieren der Flüssigkeit mit den suspendierten größeren Adsorbenspartikeln.

2. Verfahren nach Anspruch 1,
**dadurch gekennzeichnet,**
**daß** die Flüssigkeit mit den suspendierten größeren Adsorbenspartikeln vor der Filtration als teilbeladenes Adsorbensmaterial gemeinsam mit noch ungereinigter Flüssigkeit einer ersten Stufe eines Gegenstromverfahrens zugeführt wird.

3. Verfahren nach Anspruch 1 oder 2,
**dadurch gekennzeichnet,**
**daß** die Absorbenspartikel an wenigstens einer Elektrode mittels eines elektrischen Feldes agglomeriert werden und die agglomerierten Adsorbenspartikel durch Abschalten bzw. Ändern des elektrischen Feldes erneut suspendieren.

4. Verfahren nach einem der vorhergehenden Ansprüche,
**dadurch gekennzeichnet,**
**daß** die Agglomeration statt des oder zusätzlich zu dem elektrischen Feld mittels Ultraschall oder mittels Zusatz von chemischen oder biochemischen Stoffen erfolgt.

5. Verfahren nach einem der vorhergehenden Ansprüche,
**dadurch gekennzeichnet,**
**daß** beim Agglomerieren der Feststoffe eine im wesentlichen feststoffpartikelfreie Fraktion der Flüssigkeit abgezogen wird.

6. Verfahren nach einem der vorhergehenden Ansprüche,
**dadurch gekennzeichnet,**
**daß** zum Filtrieren eine Druckfiltration durchgeführt wird.

7. Verfahren nach einem der vorhergehenden Ansprüche,
**gekennzeichnet durch** seine Verwendung für die Reinigung von tierischen, pflanzlichen, maritimen oder mineralischen Ölen und/oder Fetten.

8. Verfahren nach einem der vorhergehenden Ansprüche,
**dadurch gekennzeichnet,**
**daß** als Adsorbentien Bleicherde, Kieselgele oder Aktivkohle verwendet werden.

9. Verfahren nach Anspruch 8,
**dadurch gekennzeichnet,**
**daß,** die zuzuführende Adsorbentien, insbesondere Bleicherde einen großen Feinkornanteil haben.

10. Verfahren nach einem der vorhergehenden Ansprüche,
**dadurch gekennzeichnet,**
**daß** der Feststoffgehalt der aufkonzentrierten Suspension auf 10 % bis 30 % eingestellt wird.

11. Verfahren nach einem der vorhergehenden Ansprüche,
**gekennzeichnet durch** einen diskontinuierlichen Betrieb, wobei zunächst eine Charge von zu reinigender Flüssigkeit einem elektrischen Feld ausgesetzt und agglomeriert wird, ggf. eine Fraktion gereinigte Flüssigkeit abgezogen wird, nachfolgend das elektrische Feld abgeschaltet wird und die Feststoffpartikel in der (restlichen) Flüssigkeit, ggf. also in der restlichen Flüssigkeit, suspendieren, wonach die aufkonzentrierte Suspension gefiltert wird.

12. Verfahren nach Anspruch 11,
**dadurch gekennzeichnet,**
**daß** die Agglomeration in zwei oder mehreren Einzeleinheiten durchgeführt wird, wobei diese Einheiten so zeitversetzt die Druckfiltration beschicken, daß der Gesamtprozeß kontinuierlich abläuft.

13. Verfahren nach einem der vorhergehenden Ansprüche,
**dadurch gekennzeichnet,**
**daß** ein Teilstrom der Feststoffpartikel enthaltenden Flüssigkeit der Agglomeration und der nachfolgenden erneuten Suspendierung ausgesetzt wird, wobei die aufkonzentrierte Suspension dem nicht bearbeiteten anderen Teilstrom der Flüssigkeit zugeführt und gemeinsam gefiltert wird.

14. Vorrichtung zur Durchführung des Verfahrens nach einem der vorangehenden Ansprüche,
**dadurch gekennzeichnet,**
**daß** wenigstens ein Agglomerator (10) mit einem Zulauf (11), je einem Auslauf (13, 14) für die getrennten Bestandteile Klarlauf und aufkonzentrierte Suspension und einer Vorrichtung (12) zur Erzeugung der Agglomeration, insbesondere eines elektrischen Feldes sowie einen Druckfilter (30) mit einem Zulauf für die aufkonzentrierte Suspension und je einem Auslauf (33, 34) für die getrennten Bestandteile Klarlauf und Filterkuchen vorgesehen sind.

15. Vorrichtung nach Anspruch 14,
**dadurch gekennzeichnet,**
**daß** vor dem Agglomerator (10) im Zulauf (1) ein erster Sammelbehälter (40) vorgesehen ist.

16. Vorrichtung nach Anspruch 15,
**dadurch gekennzeichnet,**
**daß** am ersten Sammelbehälter (40) eine Vakuumpumpe (44) angeschlossen ist.

17. Vorrichtung nach einem der Ansprüche 14 bis 16,
**dadurch gekennzeichnet,**
**daß** am Auslauf (14) des Agglomerators (10) ein zweiter Sammelbehälter (20) vorgesehen ist, dessen Auslauf (22) über eine Pumpe (36) zum Druckfilter (30) führt.

18. Vorrichtung nach einem der Ansprüche 14 bis 17,
**dadurch gekennzeichnet,**
**daß** wenigstens zwei parallel angeschlossene Agglomeratoren (10, 10', 10", 10"') vorgesehen sind, die stufenweise betrieben werden.

## Claims

1. Method for cleaning liquids containing impurities, with the following steps:
- addition of adsorbents, which adsorb the impurities, to the liquid,
- agglomeration of respectively several particles of adsorbent with the impurities adsorbed therein/thereon to form greater particles of adsorbent,
- renewed suspension of the now greater particles of adsorbent in the liquid and
- filtering of the liquid containing the suspended greater particles of adsorbent.

2. Method according to claim 1,
**characterised in that**
the liquid containing the suspended greater particles of adsorbent is prior to the filtration fed as a partly loaded adsorbent material together with still uncleaned liquid to a first stage of a counter- current process.

3. Method according to claim 1 or 2,
**characterised in that**
the particles of adsorbent are agglomerated on at least one electrode by means of an electric field and the agglomerated particles of adsorbent are suspended once again by the disconnection or variation of the electric field.

4. Method according to one of the preceding claims,
**characterised in that**
the agglomeration takes place instead of or in addition to the electric field by means of ultrasonics or by means of the addition of chemical or biochemical substances.

5. Method according to one of the preceding claims,
**characterised in that**
during the agglomeration of the solids a substantially solids particle-free fraction of the liquid is drawn off.

6. Method according to one of the preceding claims,
**characterised in that**
a pressure filtration is carried out for the filtration.

7. Method according to one of the preceding claims,
**characterised by** its use for the cleaning of animal, vegetable, marine or mineral oils and/or fats.

8. Method according to one of the preceding claims,
**characterised in that**
bleaching earth, silica gels or activated carbon are used as adsorbents.

9. Method according to claim 8,
**characterised in that**
the adsorbents to be fed, in particular bleaching earth, have a large fine grain content.

10. Method according to one of the preceding claims,
**characterised in that**
the solids contents of the concentrated suspension is set to 10% to 30%.

11. Method according to one of the preceding claims,
**characterised by** a discontinuous operation, in which first of all a batch of liquid to be cleaned is exposed to an electric field and agglomerated, optionally a fraction of cleaned liquid is drawn off, thereafter the electric field is disconnected and the solids particles are suspended in the (remaining) liquid, thus optionally in the remaining liquid, after which the concentrated suspension is filtered.

12. Method according to claim 11,
**characterised in that**
the agglomeration is carried out in two or more individual units, wherein said units load the pressure filter staggered in time in such a way that the entire process takes place continuously.

13. Method according to one of the preceding claims,
**characterised in that**
a part flow of the liquid containing solids particles is exposed to the agglomeration and the subsequent renewed suspension, wherein the concentrated suspension is fed to the unprocessed other part flow of the liquid and filtered together with it.

14. Apparatus for carrying out the method according to one of the preceding claims,
**characterised in that**
at least one agglomerator (10) with a feed inlet (11), one outlet (13, 14) each for the separated components (clear runnings, concentrated suspension) and an apparatus (12) for producing the agglomeration, in particular an electric field, as well as a pressure filter (30) with a feed inlet for the concentrated suspension and an outlet (33, 34) each for the separated components (clear runnings, filter cake) are provided.

15. Apparatus according to claim 14,
**characterised in that**
a first collecting tank (40) is provided upstream of the agglomerator (10) in the feed inlet (1).

16. Apparatus according to claim 15,
**characterised in that**
a vacuum pump (44) is connected to the first collecting tank (40).

17. Apparatus according to one of claims 14 to 16,
**characterised in that**
at the outlet (14) of the agglomerator (10) is provided a second collecting tank (20) the outlet (22) of which leads to the pressure filter (30) via a pump (36).

18. Apparatus according to one of claims 14 to 17,
**characterised in that**
at least two parallel connected agglomerators (10, 10', 10", 10''') are provided, which are operated in stages.

## Revendications

1. Procédé pour épurer des liquides contenant des impuretés, comprenant les étapes suivantes :
- addition d'adsorbants, qui adsorbent les impuretés, au liquide,
- agglomération de respectivement plusieurs particules d'adsorbant avec les impuretés adsorbées dedans/dessus avec des particules d'adsorbant assez grandes,
- nouvelle mise en suspension des particules d'adsorbant maintenant plus grandes dans le liquide, et
- filtrage du liquide avec les particules d'adsorbant assez grandes en suspension.

2. Procédé selon la revendication 1, **caractérisé en ce que** le liquide avec les particules d'adsorbant assez grandes en suspension est amené avant la filtration comme matériau adsorbant partiellement chargé est amené conjointement avec du liquide encore souillé à un premier niveau d'un procédé à contrecourant.

3. Procédé selon la revendication 1 ou 2, **caractérisé en ce que** les particules d'adsorbant sont agglomérées sur au moins une électrode au moyen d'un champ électrique et les particules d'adsorbant agglomérées sont à nouveau mises en suspension par déconnexion ou modification du champ électrique.

4. Procédé selon l'une quelconque des revendications précédentes, **caractérisé en ce que** l'agglomération s'effectue, au lieu ou en supplément du champ électrique, par ultrason ou par addition de substances chimiques ou biochimiques.

5. Procédé selon l'une quelconque des revendications précédentes, **caractérisé en ce qu'**une fraction du liquide exempte pour l'essentiel de particules solides est retirée du liquide lors de l'agglomération des matières solides.

6. Procédé selon l'une quelconque des revendications précédentes, **caractérisé en ce qu'**on effectue une filtration sous pression pour le filtrage.

7. Procédé selon l'une quelconque des revendications précédentes, **caractérisé par** son utilisation pour le nettoyage d'huiles et/ou graisses animales, végétales, maritimes ou minérales.

8. Procédé selon l'une quelconque des revendications précédentes, **caractérisé en ce qu'**on utilise comme adsorbants de la terre de blanchiment, des gels de silice ou du charbon actif.

9. Procédé selon la revendication 8, **caractérisé en ce que** les absorbants à apporter, en particulier la terre de blanchiment, ont une grande fraction de grains fins.

10. Procédé selon l'une quelconque des revendications précédentes, **caractérisé en ce que** la teneur en matières solides de la suspension concentrée est réglée sur 10 à 30%.

11. Procédé selon l'une quelconque des revendications précédentes, **caractérisé par** un fonctionnement discontinu, une charge de liquide à nettoyer étant exposée à un champ électrique et agglomérée, éventuellement une fraction de liquide nettoyé étant retirée, le champ électrique étant ensuite déconnecté et les particules solides étant en suspension dans le liquide (restant), éventuellement donc dans le liquide restant, après quoi la suspension concentrée est filtrée.

12. Procédé selon la revendication 11, **caractérisé en ce que** l'agglomération est effectuée dans deux ou plusieurs unités individuelles, ces unités alimentant la filtration sous pression avec un décalage dans le temps de telle façon que le processus global se déroule de façon continue.

13. Procédé selon l'une quelconque des revendications précédentes, **caractérisé en ce qu'**un flux partiel du liquide contenant des particules solides est exposé à l'agglomération et à la nouvelle mise en suspension consécutive, la suspension concentrée étant amenée à l'autre flux partiel non traité du liquide et étant filtrée en même temps.

14. Dispositif pour appliquer le procédé selon l'une quelconque des revendications précédentes, **caractérisé en ce qu'**au moins un agglomérateur (10) avec une arrivée (11), respectivement une sortie (13, 14) pour les composants séparés écoulement clair et suspension concentrée et un dispositif (12) pour générer l'agglomération, en particulier un champ électrique et un filtre sous pression (30) avec une arrivée pour la suspension concentrée et respectivement une sortie (33, 34) pour les composants séparés écoulement clair et gâteau de filtre sont prévus.

15. Dispositif selon la revendication 14, **caractérisé en ce qu'**un premier réservoir collecteur (40) est prévu avant l'agglomérateur (10) dans l'arrivée (1).

16. Dispositif selon la revendication 15, **caractérisé en ce qu'**une pompe à vide (44) est raccordée sur le premier réservoir collecteur (40).

17. Dispositif selon l'une quelconque des revendications précédentes 14 à 16, **caractérisé en ce que**, sur la sortie (14) de l'agglomérateur (10), il est prévu un deuxième réservoir collecteur (20), dont la sortie (22) aboutit par une pompe (36) au filtre sous pression (30).

18. Dispositif selon l'une quelconque des revendications 14 à 17, **caractérisé en ce qu'**au moins deux agglomérateurs (10, 10'; 10", 10''') branchés en parallèle sont prévus, qui sont exploités de façon progressive.
